# EUROPÄISCHE PATENTANMELDUNG

(11) **EP 4 795 923 A1**
(43) Veröffentlichungstag der Anmeldung: **26.08.2026**
(21) Anmeldenummer: 26152213.0
(22) Anmeldetag: 16.01.2026
(51) Int. Cl.: A01D 78/10, A01D 80/00

(54) **FAHRERASSISTENZSYSTEM FÜR EIN LANDWIRTSCHAFTLICHES FAHRZEUGGESPANN**

(30) Priorität: 24.02.2025 DE 102025106804
(71) Anmelder: CLAAS Saulgau GmbH, 88340 Bad Saulgau (DE)
(72) Erfinder: Rupp, Magnus, 73494 Rosenberg (DE); Mock, Andreas, 88284 Wolpertswende (DE); Fischer, Josef, 88400 Biberach (DE); Monkenbusch, Robin, 33378 Rheda-Wiedenbrück (DE); Speer, Christian, 78267 Aach (DE); Schmitt, Mathias, 78576 Emmingen-Liptingen (DE); Spieler, Raphael, 88339 Bad Waldsee (DE); Frick, Clemens, 88356 Ostrach (DE)
(74) Vertreter: CLAAS Gruppe

(57) **Zusammenfassung**

Die vorliegende Erfindung betrifft ein Fahrerassistenzsystem (15) für ein landwirtschaftliches Fahrzeuggespann (1) aus Traktor (2) und adaptierter Schwadvorrichtung (3). Das Fahrerassistenzsystem (1) umfasst eine Recheneinheit (16), einen Speicher (17) und zumindest eine Bedien- und Anzeigeeinheit (18). Der Bediener (B) charakterisiert mittels der Bedien- und Anzeigeeinheit (18) einen dem Schwaden nachgelagerten Prozessschritt einer Erntegutprozesskette. In dem Speicher (17) sind Kennfelder (K1a, ..., K1n; K2a, ..., K2n) hinterlegt, welche funktionale Zusammenhänge von Schwadprozessparametern repräsentieren. Basierend auf der durch den Bediener (B) vorgenommenen Charakterisierung des dem Schwaden nachgelagerten Prozessschrittes wird ein in dem Speicher (17) hinterlegtes Kennfeld (K2a, ..., K2n) ausgewählt. Die Recheneinheit (16) steuert Arbeitsaggregate des Traktors (2) und/oder der Schwadvorrichtung (3) entsprechend des ausgewählten Kennfeldes (K2a, ..., K2n) an.

## Beschreibung

Die vorliegende Erfindung betrifft ein Fahrerassistenzsystem für ein landwirtschaftliches Fahrzeuggespann gemäß dem Oberbegriff des unabhängigen Patentanspruchs 1 sowie ein landwirtschaftliches Fahrzeuggespann mit einem solchen Fahrerassistenzsystem gemäß dem unabhängigen Patentanspruch 13.

Ein Ernteprozess zeichnet sich durch verschiedene Prozessschritte aus, die abhängig vom Erntegut sowie von Umgebungsbedingungen und den Zielsetzungen des Ernteprozesses variieren können. Übliche Prozessschritte eines Ernteprozesses auf einem Feld sind beispielsweise ein Mähen, ein Wenden, ein Schwaden und eine Schwadernte. Die einzelnen Prozessschritte folgen dabei bedarfsweise, beispielsweise abhängig von der Art des Ernteguts, von Umgebungsbedingungen und/oder einer Zielsetzung des Ernteprozesses, aufeinander. Die Summe der jeweils aufeinanderfolgenden Prozessschritte eines spezifischen Ernteprozesses wird auch als Ernteprozesskette bezeichnet.

Abhängig von der Zielsetzung, mit der ein solcher Ernteprozess durchgeführt wird, wird als Ergebnis bzw. Produkt der Abfolge von Prozessschritten beispielsweise Futtermittel oder Biomasse für eine Biogasanlage erhalten. Das Ergebnis bzw. Produkt wird dabei maßgeblich von den eingesetzten landwirtschaftlichen Ernte-/Arbeitsmaschinen sowie deren Maschineneinstellungen beeinflusst. Insbesondere dem Prozessschritt "Schwaden", der in aller Regel mittels eines landwirtschaftlichen Fahrzeuggespanns, bestehend aus einem Traktor und einer an den Traktor adaptierten Schwadvorrichtung in Gestalt eines Kreiselschwaders, durchgeführt wird, kommt in der Ernteprozesskette ein wesentlicher Stellenwert zu.

Kreiselschwader verfügen über sogenannte Schwadkreisel, die mittels eines Fahrwerks im Betrieb Betriebszustand auf einer zu bearbeitenden landwirtschaftlichen Fläche, auf welcher sich gemähtes und über den Kreiselschwader zu schwadendes Erntegut befindet, abgestützt ist. Jeder Schwadkreisel eines Kreiselschwaders umfasst einen umlaufenden, um eine Hochachse angetriebenen und mit gesteuerten Zinkenarmen und Rechzinken bestückten Rechkreisel, wobei die Zinkenarme des Rechkreisels von einer Kurvenbahn über Rollenhebel gesteuert sind. Typischerweise ist der Rechkreisel eines Schwadkreisels über ein Getriebe, insbesondere ein Winkelgetriebe, antreibbar. Grundsätzlich sorgen die Laufräder des Fahrwerks des Kreiselschwaders, die sich unterhalb des oder jedes Schwadkreisels befinden, für die Bodenanpassung der Rechzinken. Ein Abstand zwischen den Rechzinken und dem Boden während des Rechvorgangs soll möglichst konstant sein. Die Kreiselhöhe des oder jedes Schwadkreisels kann zudem im Betrieb eingestellt werden.

Aus der EP 2 850 934 A2 ist beispielhaft ein solcher Kreiselschwader bekannt. Der Kreiselschwader umfasst eine Steuerungseinrichtung, die eine Kreiselhöhe des oder jedes Schwadkreisels abhängig von mindestens einer messtechnisch erfassten Größe im Betrieb einstellt. Die Steuerungseinrichtung stellt insbesondere die Kreiselhöhe des oder jedes Schwadkreisels abhängig von der im Betrieb zu mindestens einem Schwad zusammengelegten Erntemasse und/oder abhängig von einer Fortbewegungsgeschwindigkeit des Kreiselschwaders und/oder abhängig von Schwingungen der Rechzinken im Betrieb ein.

Die Kreiselhöhe bzw. Rechhöhe stellt allerdings nur einen sogenannten Schwadprozessparameter dar, welcher im Betrieb des landwirtschaftlichen Fahrzeuggespanns eingestellt werden kann. Es gibt eine Vielzahl weiterer Schwadprozessparameter, die im Betrieb einstellbar sind und sich gegenseitig beeinflussen. Ein Bediener des landwirtschaftlichen Fahrzeuggespanns kennt oftmals nicht die Abhängigkeiten aller Schwadprozessparameter voneinander, was die optimale Einstellung des Fahrzeuggespanns im Hinblick auf die dem Schwadprozess zugrunde liegende Zielstellung unter Berücksichtigung von Umgebungsbedingungen für den Bediener schwer werden lässt. Oftmals wird das Fahrzeuggespann mit einer falschen Einstellung betrieben, was sich nachteilig auf das Schwaden selbst auswirkt, ferner allerdings erhebliche Auswirkungen auf das Ergebnis bzw. Produkt der Abfolge von Prozessschritten, also das Futtermittel oder die Biomasse, hat.

Ausgehend hiervon ist es demnach die Aufgabe der vorliegenden Erfindung die beschriebenen Nachteile auszuräumen und insbesondere ein Fahrerassistenzsystem für ein landwirtschaftliches Fahrzeuggespann aus Traktor und Schwadvorrichtung bereitzustellen, welches dem Bediener eine unter Berücksichtigung einer Zielstellung des Schwadprozesses sowie von dem Schwadprozess nachfolgenden bzw. nachgelagerten Prozessschritten optimale Einstellung des Fahrzeuggespanns erlaubt, ihn jedoch gleichzeitig von der Kenntnis der komplexen Zusammenhänge der verschiedenen Schwadprozessparameter entlastet.

Diese Aufgabe wird erfindungsgemäß durch die hier offenbarten Ausführungsformen gelöst, die insbesondere durch den Gegenstand des unabhängigen Patentanspruchs 1 definiert sind. Die abhängigen Ansprüche 2 bis 12 betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Demnach betrifft die vorliegende Erfindung ein Fahrerassistenzsystem für ein landwirtschaftliches Fahrzeuggespann. Das landwirtschaftliche Fahrzeuggespann umfasst einen Traktor und eine an den Traktor adaptierte Schwadvorrichtung zum Schwaden von abgemähtem Erntegut. Der Traktor und die Schwadvorrichtung umfassen jeweils mittels des Fahrerassistenzsystems ansteuerbare Arbeitsaggregate umfassen, wobei das Fahrerassistenzsystem dazu vorgesehen und eingerichtet ist, einen Bediener bei der Einstellung des landwirtschaftlichen Fahrzeuggespanns zu unterstützen. Das Fahrerassistenzsystem umfasst eine Recheneinheit, einen Speicher und zumindest eine Bedien- und Anzeigeeinheit, wobei die Recheneinheit dazu vorgesehen und eingerichtet ist, von fahrzeuggespanninternen Sensorsystemen generierte Informationen, externe Informationen, in dem Speicher hinterlegbare Informationen und mittels der Bedien- und Anzeigeeinheit vorgebbare Informationen zu verarbeiten. Das Fahrerassistenzsystem ist dadurch gekennzeichnet, dass mittels der Bedienund Anzeigeeinheit ein dem Schwaden nachgelagerter Prozessschritt einer Erntegutprozesskette durch den Bediener charakterisierbar ist, wobei in dem Speicher Kennfelder hinterlegt sind, welche jeweils funktionale Zusammenhänge von Schwadprozessparametern, die mittels Ansteuerung der Arbeitsaggregate des Traktors und/oder der Schwadvorrichtung einstellbar sind, repräsentieren, wobei das Fahrerassistenzsystem dazu vorgesehen und eingerichtet ist, basierend auf der durch den Bediener vorgenommenen Charakterisierung des dem Schwaden nachgelagerten Prozessschrittes ein in dem Speicher hinterlegtes Kennfeld auszuwählen, wobei die Recheneinheit dazu vorgesehen und eingerichtet ist, die Arbeitsaggregate des Traktors und/oder der Schwadvorrichtung entsprechend des ausgewählten Kennfeldes, vorzugsweise automatisch, anzusteuern.

Durch das erfindungsgemäße Fahrerassistenzsystem kann der Bediener lediglich anhand der Charakterisierung des dem Schwaden nachgelagerten Prozessschrittes, also einer mittelbaren oder unmittelbaren Vorgabe des Prozessschrittes der Erntegutprozesskette, welcher das von dem landwirtschaftlichen Fahrzeuggespann zusammengerechte Schwad verarbeitet, eine effiziente und optimale Einstellung des landwirtschaftlichen Fahrzeuggespanns vornehmen, ohne über wesentliche Kenntnisse des Schwadprozesses selbst und etwaiger dem Schwadprozess zugrundeliegender Schwadprozessparameter und deren Auswirkungen auf den nachgelagerten Prozessschritt zu verfügen. Die Bedien- und Anzeigeeinheit erlaubt dem Bediener ein Charakteristikum oder mehrere Charakteristika des nachgelagerten Prozessschrittes vorzugeben, basierend auf welchen das Fahrerassistenzsystem in der Lage ist auf den nachgelagerten Prozessschritt zu schließen. Abhängig von der seitens des Bedieners vorgenommenen Charakterisierung wird ein hinterlegtes Kennfeld gewählt, welches funktionale Zusammenhänge von verschiedenen Schwadprozessparametern berücksichtigt. Mit Blick auf die möglichen nachgelagerten Prozessschritte, von denen einer durch Charakterisierung des Bedieners vorgegeben wird, sind verschiedene Kennfelder im Speicher des Fahrerassistenzsystems hinterlegt. Abhängig von der seitens des Bedieners vorgenommenen Charakterisierung und des daraus bestimmten nachgelagerten Prozessschrittes wird ein geeignetes Kennfeld vom Fahrerassistenzsystem bzw. der Steuereinheit gewählt, welches die verschiedenen Schwadprozessparameter derart in Verbindung miteinander bringt, dass bei einer Einstellung von Arbeitsaggregaten des Fahrzeuggespanns zur Erzielung der aus dem Kennfeld abgeleiteten Schwadprozessparameter dies unter der Prämisse erfolgt, ein möglichst optimales Schwad zur Verarbeitung durch die Arbeitsmaschine des nachgelagerten Prozessschrittes bereitzustellen. Das Kennfeld stellt somit das Expertenwissen dar, auf welches der Bediener durch einfache Charakterisierung des nachgelagerten Prozessschrittes zugreifen kann, ohne selbst Kenntnis hierüber zu haben. Auch einem unerfahrenen Bediener ist es somit durch das erfindungsgemäße Fahrerassistenzsystem möglich, das landwirtschaftliche Fahrzeuggespann optimal im Hinblick auf den nachgelagerten Prozessschritt hin einzustellen bzw. vom Fahrerassistenzsystem einstellen zu lassen und somit ein für den nachgelagerten Prozessschritt optimiertes bzw. optimales Schwad zu erzeugen.

Gemäß einer vorteilhaften Weiterbildung der Erfindung ist vorgesehen, dass die Charakterisierung des dem Schwaden nachgelagerten Prozessschrittes mittels der Bedien- und Anzeigeeinheit durch den Bediener anhand einer Vorgabe des nachgelagerten Prozessschrittes, insbesondere Ballenpressen oder Schwadernte, einer Arbeitsmaschine zur Durchführung des nachgelagerten Prozessschrittes, insbesondere landwirtschaftliche Ballenpresse, Feldhäcksler und/oder Ladewagen, und/oder eines zur Verarbeitung des Schwads vorgesehenen Arbeitsaggregats einer Arbeitsmaschine zur Durchführung des nachgelagerten Prozessschrittes, insbesondere Längsschnittvorrichtung oder Querschnittvorrichtung, erfolgt.

Gemäß einer vorteilhaften Weiterbildung der Erfindung ist vorgesehen, dass die von fahrzeuggespanninternen Sensorsystemen generierten Informationen, die externen Informationen, die im Speicher hinterlegbaren Informationen und die mittels der Bedien- und Anzeigeeinheit vorgebbaren Informationen Eingangsgrößen des ausgewählten Kennfeldes zur Bestimmung eines optimalen Betriebspunktes bilden, wobei die Recheneinheit dazu vorgesehen und eingerichtet ist, durch Ansteuerung der Arbeitsaggregate des Traktors und/oder der Schwadvorrichtung das landwirtschaftliche Fahrzeuggespann im optimalen Betriebspunkt zu betreiben.

Vorzugsweise ist vorgesehen, dass die Recheneinheit dazu vorgesehen und eingerichtet ist, mittels der von fahrzeuggespanninternen Sensorsystemen generierten Informationen einen aktuellen Betriebspunkt zu ermitteln und den aktuellen Betriebspunkt mit dem anhand des ausgewählten Kennfeldes bestimmten optimalen Betriebspunkt zu vergleichen.

Weiter vorzugsweise ist vorgesehen, dass die Recheneinheit dazu vorgesehen und eingerichtet ist, basierend auf dem Vergleich zum Erreichen des optimalen Betriebspunktes erforderliche Schwadprozessparameter durch Ansteuerung der Arbeitsaggregate des Traktors und/oder der Schwadvorrichtung einzustellen.

Durch die Berücksichtigung von verschiedenen internen und externen Informationen als Eingangsgrößen des Kennfeldes kann die Auswahl von geeigneten Schwadprozessparametern und die entsprechende Einstellung der Arbeitsaggregate von Traktor und Schwadvorrichtung unter Berücksichtigung von diversen vorherrschenden Randbedingungen erfolgen und ein hierfür optimaler Betriebspunkt im Kennfeld gewählt werden. Die Optimierung des Schwads wird somit deutlich robuster und zuverlässiger. Insbesondere vorherrschende Umweltbedingungen, die erhebliche Auswirkungen auf das im Schwad zusammengerechte Erntegut haben, können hierdurch berücksichtigt werden. Abweichungen von Soll- und Ist-Zustand des mittels des Fahrzeuggespanns unter Berücksichtigung der Vorgabe des nachgelagerten Prozessschrittes zusammengerechten Schwades können einerseits bestimmt und andererseits erheblich reduziert werden.

Gemäß einer vorteilhaften Weiterbildung der Erfindung ist vorgesehen, dass die Bedien- und Anzeigeeinheit dazu vorgesehen und eingerichtet ist, dem Bediener zumindest zwei konkurrierende Schwadprozesskriterien vorzugeben, wobei mittels der Bedien- und Anzeigeeinheit eine Gewichtung der vorgegebenen Schwadprozesskriterien durch den Bediener vornehmbar ist, wobei das Fahrerassistenzsystem dazu vorgesehen und eingerichtet ist, basierend auf der durch den Bediener vorgenommenen Gewichtung der Schwadprozesskriterien den optimalen Betriebspunkt im ausgewählten Kennfeld und/oder das ausgewählte Kennfeld zu adaptieren oder ein anderes im Speicher hinterlegtes Kennfeld auszuwählen.

Vorzugsweise ist vorgesehen, dass die Schwadprozesskriterien "Leistung" und "Qualität" sind, wobei das Schwadprozesskriterium "Leistung" die Schwadprozesszielgrößen Schwaddichte und/oder Trockenmassegehalt des Schwades und das Schwadprozesskriterium "Qualität" die Schwadprozesszielgrößen Verschmutzungsgrad des Schwades, Halmausrichtung im Schwad und/oder Schwadgeometrie umfasst, wobei die Prozesszielgrößen abrufbar im Speicher hinterlegt sind und/oder durch den Bediener auswählbar und/oder parametrisierbar sind.

Durch die Vorgabe von zwei konkurrierenden Schwadprozesskriterien in einem weiteren Schritt, insbesondere der beiden spezifischen Schwadprozesskriterien "Leistung" und "Qualität" mit den diesen Kriterien zugrundeliegenden Schwadprozesszielgrößen, können die für den Landwirt wesentlichen und relevanten Größen des durch den Ablauf der Ernteprozesskette erhaltenen Ergebnisses bzw. Produkts zielgerichtet beeinflusst werden. Das Schwad wird durch das landwirtschaftliche Fahrzeuggespann entsprechend der Gewichtung derart zusammengelegt, dass nicht nur der nachgelagerte Prozessschritt unter idealen Voraussetzungen und hoher Prozessstabilität erfolgen kann, sondern auch das am Ende der Erntegutprozesskette erhaltene Ergebnis bzw. Produkt möglichst mit den seitens des Landwirts geforderten Größen vorliegt.

Gemäß einer vorteilhaften Weiterbildung der Erfindung ist vorgesehen, dass die Bedien- und Anzeigeeinheit zumindest ein virtuelles Bedienelement zur Vorgabe der Gewichtung der vorgegebenen Schwadprozesskriterien durch den Bediener umfasst.

Die Implementierung eines virtuellen Bedienelements schafft eine besonders intuitive und für den Bediener nachvollziehbare sowie verständliche Möglichkeit die Gewichtung der Schwadprozesskriterien vornehmen zu können.

Gemäß einer vorteilhaften Weiterbildung der Erfindung ist vorgesehen, dass die Schwadvorrichtung als Kreiselschwader ausgebildet ist, wobei der Kreiselschwader mindestens einen Schwadkreisel, der einen Rechkreisel mit an Zinkenarmen gelagerten Rechzinken aufweist, umfasst, wobei die Schwadprozessparameter eine Drehzahl des Schwadkreisels, eine Umfangsgeschwindigkeit des Schwadkreisels, eine Rechhöhe des Schwadkreisels, eine Neigung des Schwadkreisels, eine horizontale Lage des Schwadkreisels, ein Auflagedruck des Schwadkreisels, eine Fahrgeschwindigkeit des landwirtschaftlichen Fahrzeuggespanns und/oder eine Zapfwellendrehzahl des Traktors sind.

Gemäß einer vorteilhaften Weiterbildung der Erfindung ist vorgesehen, dass die externen Informationen und/oder die im Speicher hinterlegbaren Informationen Geodaten, insbesondere Daten zur Lokalisierung des landwirtschaftlichen Fahrzeuggespanns, topologische Daten, Wetterdaten, insbesondere eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung, und/oder agronomische Daten, insbesondere Bodendaten, Bestandsdaten, Ertragsdaten, Inhaltsstoffdaten und/oder Flächendaten, umfassen.

Die angeführten Daten, die als externe und/oder im Speicher hinterlegbare Informationen vorliegen, erlauben eine möglichst umfassende Abbildbarkeit der vorherrschenden Umgebungsbedingungen, wodurch der optimale Betriebspunkt im Kennfeld präziser gewählt werden kann und eine mögliche Abweichung von Soll- und Ist-Zustand des von dem Fahrzeuggespann zusammengelegten Schwads weiter reduziert werden kann.

Gemäß einer vorteilhaften Weiterbildung der Erfindung ist vorgesehen, dass das Fahrerassistenzsystem dazu vorgesehen und eingerichtet ist, mittels der Bedien- und Anzeigeeinheit die Einstellung des landwirtschaftlichen Fahrzeuggespanns mit dem Bediener dialogbasiert durchzuführen.

Gemäß einer vorteilhaften Weiterbildung der Erfindung ist vorgesehen, dass das Fahrerassistenzsystem dazu vorgesehen und eingerichtet ist, mittels der zumindest einen Bedien- und Anzeigeeinheit die durch Ansteuerung der Arbeitsaggregate des Traktors und/oder der Schwadvorrichtung einzustellenden Schwadprozessparameter dem Bediener zu visualisieren.

Die Möglichkeit die Einstellung des Fahrzeuggespanns über das Fahrerassistenzsystem mit dem Bediener dialogbasiert vorzunehmen und insbesondere etwaige einzustellende Schwadprozessparameter dem Bediener zu visualisieren sorgt dafür, dass der Bediener einerseits Vertrauen in das Fahrerassistenzsystem und die Optimierungsroutine gewinnt, dabei selbst Expertenwissen aufbauen oder erweitern kann, andererseits stets die Möglichkeit hat wesentliche Einstellungen doch anders vorzunehmen als vom Fahrerassistenzsystem vorgeschlagen, da Wünsche oder Erkenntnisse bedienerseitig vorliegen, über die das Fahrerassistenzsystem kein Wissen hat.

Weiterhin wird die erfindungsgemäße Aufgabe durch ein landwirtschaftliches Fahrzeuggespann umfassend einen Traktor und eine an den Traktor adaptierte Schwadvorrichtung zum Schwaden von abgemähtem Erntegut sowie ein solches zuvor beschriebenes Fahrerassistenzsystem gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemäßen landwirtschaftlichen Fahrzeuggespanns, umfassend einen Traktor und eine adaptierte Schwadvorrichtung zum Schwaden von abgemähtem Erntegut; und

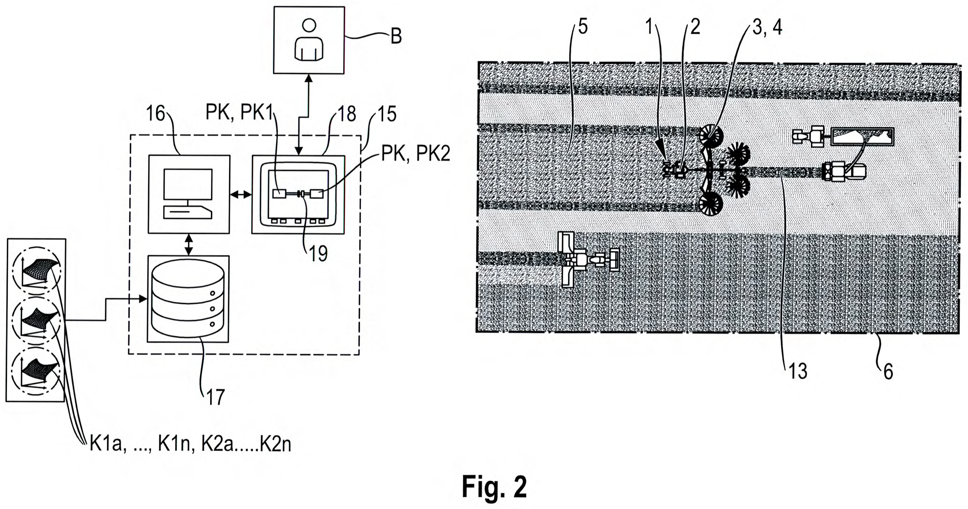

- FIG. 2: eine schematische und exemplarische Darstellung eines erfindungsgemäßen Fahrerassistenzsystems für das erfindungsgemäße landwirtschaftliche Fahrzeuggespann aus FIG. 1.

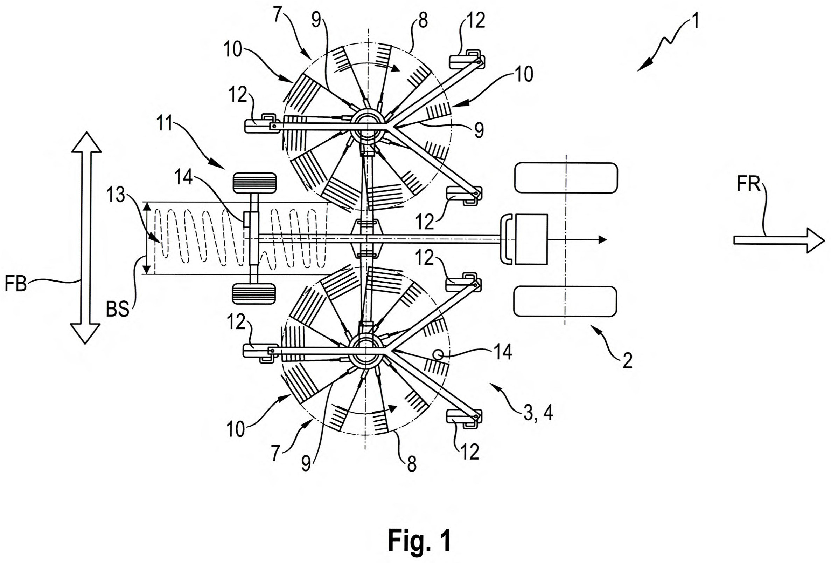

FIG. 1 zeigt eine schematische und exemplarische Darstellung eines erfindungsgemäßen landwirtschaftlichen Fahrzeuggespanns 1, welches ein als Traktor 2 ausgebildetes Zugfahrzeug und eine an den Traktor 2 adaptierte Schwadvorrichtung 3, hier einen sogenannten Kreiselschwader 4, zum Schwaden von abgemähtem Erntegut 5 auf einer landwirtschaftlichen Fläche 6 umfasst und welches sich in Fahrtrichtung FR über die landwirtschaftliche Fläche 6 bewegt.

Im gezeigten Ausführungsbeispiel der FIG. 1 umfasst der Kreiselschwader 4 zwei Schwadkreisel 7 als Arbeitsaggregate, welche jeweils einen Rechkreisel 8 aus mehreren Zinkenarmen 9 umfassen, wobei an jedem Zinkenarm 9 mehrere Rechzinken 10 gelagert sind. Die Schwadkreisel 7 des Kreiselschwaders 4 sind an einem Fahrgestell 11 gelagert, wobei das Fahrgestell 11 mehrere Laufräder 12 umfasst, mit Hilfe derer der Kreiselschwader 4 auf der zu bearbeitenden landwirtschaftlichen Fläche 6 aufsteht bzw. über die der Kreiselschwader 4 über die zu bearbeitende landwirtschaftliche Fläche 6 mit Hilfe des Traktors 2 in Fahrrichtung FR bewegt werden kann. Mittels der im Ausführungsbeispiel der FIG. 1 dargestellten zwei Schwadkreisel 7 erfasst der Kreiselschwader 4 das abgemähte Erntegut 5 von der landwirtschaftlichen Fläche 6 über die Rechzinken 10 und legt das erfasste Erntegut 5 zu einem Schwad 13 zusammen. Die Anzahl der Schwadkreisel 7 kann von dem in FIG. 1 gezeigten Ausführungsbeispiel des Kreiselschwaders 4 abweichen. So kann der Kreiselschwader 4 einen einzigen Schwadkreisel 7 oder mehr als zwei Schwadkreisel 7, beispielsweise vier oder sechs Schwadkreisel 7, umfassen.

Der Kreiselschwader 4 umfasst eine oder mehrere - in den FIGs. nicht dargestellte - Verstelleinrichtungen, mit deren Hilfe im Betrieb eine sogenannte Rechhöhe und ein Auflagedruck eines jeweiligen Schwadkreisels 7 eingestellt werden kann, um im Betrieb den Abstand der Rechzinken 10 zur landwirtschaftlichen Fläche 6 einzustellen. Weiterhin umfasst der Kreiselschwader 4 eine oder mehrere weitere - in den FIGs. nicht dargestellte - Verstelleinrichtungen, mit deren Hilfe im Betrieb eine horizontale Lage der Schwadkreisel 7 in Breitenrichtung FB des landwirtschaftlichen Fahrzeuggespanns 1 eingestellt werden kann, wodurch sich die Breite BS des mittels des Kreiselschwaders 4 zusammengelegten Schwads 13 beeinflussen lässt. Zudem kann über die bereits genannten Verstelleinrichtungen oder über weitere - in den FIGs. nicht dargestellte - Verstelleinrichtungen eine Neigung einen jeweiligen Schwadkreisels 7 eingestellt werden. Nicht nur die Lage und Ausrichtung der Schwadkreisel 7 kann verstellt werden, sondern auch die Drehzahlen bzw. Umfangsgeschwindigkeiten der Schwadkreisel 7 können beeinflusst werden. Um die Drehzahl bzw. Umfangsgeschwindigkeit eines Schwadkreisels 7 zu verändern, wird die Drehzahl der Zapfwelle des Traktors 2 verändert, da diese über einen Antriebsstrang mit den Schwadkreiseln 7 wirkverbunden ist. Die Drehzahlen bzw. Umfangsgeschwindigkeiten, die Rechhöhen, die Auflagedrücke sowie die horizontalen Lagen der jeweiligen Schwadkreisel 7 sind sogenannte Schwadprozessparameter. Neben den genannten Schwadprozessparametern P, die durch Ansteuerung der Arbeitsaggregate des Kreiselschwaders 4 eingestellt werden können, sind auch eine Fahrgeschwindigkeit des landwirtschaftlichen Fahrzeuggespanns 1 und eine Zapfwellendrehzahl des Traktors 2 Schwadprozessparameter, die durch Ansteuerung von Arbeitsaggregaten des Traktors 2 eingestellt werden können. Das landwirtschaftliche Fahrzeuggespann 1 kann zur Überwachung der genannten Schwadprozessparameter und zur Überwachung anderer Maschinenparameter diverse Sensorsysteme 14 umfassen, die jeweils einen oder mehrere Sensoren gleicher oder verschiedener Sensortechnologien aufweisen, von denen beispielhaft zwei in FIG. 1 dargestellt sind. Die von diesen Sensorsystemen 14 generierten Informationen, werden nachfolgend als von fahrzeuggespanninternen Sensorsystemen 14 generierte Informationen bezeichnet.

Wie eingangs angedeutet ist die Einstellung der verschiedenen Schwadprozessparameter während des Betriebs des landwirtschaftlichen Fahrzeuggespanns 1 auf der landwirtschaftlichen Fläche 6 für einen Bediener B des landwirtschaftlichen Fahrzeuggespanns 1 nicht trivial. Das mittels des Fahrzeuggespanns 1 zusammengelegte Schwad 13 beeinflusst wesentlich die dem Schwaden nachfolgenden bzw. nachgelagerten Prozessschritte einer Erntegutprozesskette, also ein Ballenpressvorgang oder eine Schwadernte mittels Feldhäcksler und/oder Ladewagen, und demnach das durch die Erntegutprozesskette erhaltene Ergebnis, also das Futtermittel oder die Biomasse. Fehlerhafte Einstellungen des landwirtschaftlichen Fahrzeuggespanns 1 wirken sich demnach unmittelbar auf das Prozessergebnis aus.

Erfindungsgemäß ist daher ein Fahrerassistenzsystem 15 für das landwirtschaftliches Fahrzeuggespann 1 vorgesehen, welches die Ansteuerung der Arbeitsaggregate des landwirtschaftlichen Fahrzeuggespanns 1, also des Traktors 2 und der Schwadvorrichtung 3, erlaubt und dazu vorgesehen und eingerichtet ist, den Bediener B bei der Einstellung des landwirtschaftlichen Fahrzeuggespanns 1, also des Traktors 2 und der Schwadvorrichtung 3, zu unterstützen.

Das Fahrerassistenzsystem 15 umfasst eine Recheneinheit 16, einen Speicher 17 sowie zumindest eine Bedien- und Anzeigeeinheit 18, welche zur Übertragung von Daten miteinander verbunden sind. Das Fahrerassistenzsystem 15 bzw. die genannten Einrichtungen 16, 17, 18 des Fahrerassistenzsystems 15 sind ferner mit den Sensorsystemen 14 des landwirtschaftlichen Fahrzeuggespanns 1 zur Übertragung von Daten verbunden. Die Bedien- und Anzeigeeinheit 18 ist dazu vorgesehen und eingerichtet, dem Bediener B einerseits Informationen, beispielsweise gegenwärtig vorherrschende Schwadprozessparameter und/oder einzustellende Schwadprozessparameter, zu visualisieren, andererseits auch Eingaben vom Bediener B zu empfangen. Die Bedien- und Anzeigeeinheit 18 kann zum Empfang der Informationen vom Bediener B virtuelle Bedienelemente, physische Bedienelemente und/oder andere Mittel zum Empfang von Informationen umfassen. Über die Bedien- und Anzeigeeinheit 18 kann das Fahrerassistenzsystem 15 zur Einstellung des landwirtschaftlichen Fahrzeuggespanns 1 entweder in einem Dialogmodus mit dem Bediener B, d.h. die Einstellung des landwirtschaftlichen Fahrzeuggespanns 1 wird mit dem Bediener B dialogbasiert durchgeführt, oder in einem Automatikmodus betrieben werden. Der Speicher 17 des Fahrerassistenzsystems 15 ist dazu vorgesehen und eingerichtet, Informationen und noch näher beschriebene Kennfelder zu speichern, im Folgenden auch als im Speicher 17 hinterlegbare bzw. hinterlegte Informationen und Kennfelder bezeichnet, die von der Recheneinheit 16 und der Bedien- und Anzeigeeinheit 18 abrufbar und verarbeitbar sind. Die im Speicher 17 hinterlegbaren bzw. hinterlegten Informationen können beispielsweise Geodaten, insbesondere Daten zur Lokalisierung des landwirtschaftlichen Fahrzeuggespanns, topologische Daten, Wetterdaten, insbesondere eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung, und/oder agronomische Daten, insbesondere Bodendaten, Bestandsdaten, Ertragsdaten, Inhaltsstoffdaten und/oder Flächendaten, sein, die auch als externe Informationen bezeichnet werden. Im Speicher können allerdings auch andere Informationen als die externen Informationen hinterlegbar bzw. hinterlegt sein, beispielsweise die von den fahrzeuggespanninternen Sensorsystemen 14 generierten Informationen. Die Recheneinheit 16 ist dazu vorgesehen und eingerichtet, die von den fahrzeuggespanninternen Sensorsystemen 14 generierten Informationen, die externen Informationen, in dem Speicher 17 hinterlegbare bzw. hinterlegte Informationen und mittels der Bedien- und Anzeigeeinheit 18 vorgebbare bzw. vorgegebene Informationen zu verarbeiten. Weiterhin ist die Recheneinheit 16 dazu vorgesehen und eingerichtet, die verschiedenen Arbeitsaggregate des landwirtschaftlichen Fahrzeuggespanns 1, also die Arbeitsaggregate des Traktors 2 und/oder die Arbeitsaggregate der Schwadvorrichtung 3, hier des Kreiselschwaders 4, zur Einstellung der verschiedenen Schwadprozessparameter anzusteuern. Die Ansteuerung der Arbeitsaggregate des landwirtschaftlichen Fahrzeuggespanns 1 kann dabei unmittelbar durch die Recheneinheit 16 selbst und/oder mittelbar durch Ansteuerung etwaiger - in den FIGs. nicht dargestellter - Steuereinrichtungen des landwirtschaftlichen Fahrzeuggespanns 1, die basierend auf der Ansteuerung durch die Recheneinheit 16 die verschiedenen Arbeitsaggregate des landwirtschaftlichen Fahrzeuggespanns 1 zur Einstellung der Schwadprozessparameter ansteuern, erfolgen.

Die Unterstützung des Bedieners B bei der Einstellung des landwirtschaftlichen Fahrzeuggespanns 1 kann nunmehr mittels des erfindungsgemäßen Fahrerassistenzsystems 15 auf zwei Weisen erfolgen. Gemäß einer ersten Ausgestaltung erfolgt die Unterstützung des Bedieners B durch das Fahrerassistenzsystem 15 mittels Vorgabe von sogenannten Schwadprozesskriterien PK. Schwadprozesskriterien PK sind dabei Zielstellungen gemäß derer das landwirtschaftliche Fahrzeuggespann 1 aus Traktor 2 und Schwadvorrichtung 3, hier Kreiselschwader 4, betrieben werden kann. Jedes Schwadprozesskriterium PK unterliegt dabei dem Zweck den Betrieb des landwirtschaftlichen Fahrzeuggespanns 1 im Hinblick auf eine bestimmte definierbare bzw. definierte Zielstellung zu verbessern bzw. zu optimieren. Vorliegend ist das Fahrerassistenzsystem 15 dazu vorgesehen und eingerichtet, den Bediener B bei der Einstellung des landwirtschaftlichen Fahrzeuggespanns 1 unter Vorgabe zweier konkurrierender Schwadprozesskriterien PK1, PK2 zu unterstützen. Die beiden konkurrierenden Schwadprozesskriterien PK1, PK2 sind zum einen "Leistung" und zum anderen "Qualität". Jedem Schwadprozesskriterium PK1, PK2 unterliegen dabei verschiedene Schwadprozesszielgrößen, die abrufbar im Speicher 17 hinterlegt und/oder durch den Bediener B auswählbar und/oder parametrisierbar sind. Im Hinblick auf das Schwadprozesskriterium PK1"Leistung" sind dieser Strategie unterliegende Schwadprozesszielgrößen eine Schwaddichte und/oder eine Trockenmassegehalt des von der Schwadvorrichtung 3 zusammengelegten Schwads 13. Im Hinblick auf das Schwadprozesskriterium PK2 "Qualität" sind dieser Strategie unterliegende Schwadprozesszielgrößen ein Verschmutzungsgrad des von der Schwadvorrichtung 3, hier des Kreiselschwaders 4, zusammengelegten bzw. -gerechten Schwads 13, eine Halmausrichtung im von der Schwadvorrichtung 3, hier des Kreiselschwaders 4, zusammengelegten bzw. -gerechten Schwads 13 und/oder eine Geometrie des von der Schwadvorrichtung 3, hier des Kreiselschwaders 4, zusammengelegten bzw. -gerechten Schwads 13, auch als Schwadgeometrie bezeichnet.

Zwecks verbesserter Einstellung des landwirtschaftlichen Fahrzeuggespanns 1 werden die zwei konkurrierenden Schwadprozesszielgrößen hier "Leistung" und "Qualität", von der Bedien- und Anzeigeeinheit 18 dem Bediener B vorgegeben, vorzugsweise durch Anzeige der beiden Schwadprozesskriterien PK1, PK2 auf der Bedien- und Anzeigeeinheit 18. Der Bediener B hat nach Vorgabe der Schwadprozesskriterien PK1, PK2 durch die Bedienund Anzeigeeinheit 18 die Möglichkeit mittel der Bedien- und Anzeigeeinheit 18 eine Gewichtung der vorgegebenen Schwadprozesskriterien PK1, PK2, hier "Leistung" und "Qualität", vorzunehmen. Die Gewichtung kann auf verschiedene Arten und Weisen erfolgen, bevorzugt umfasst die Bedien- und Anzeigeeinheit 18 ein virtuelles Bedienelement 19 zur Vorgabe der Gewichtung durch den Bediener B. Je nach gewählter Gewichtung der Schwadprozesskriterien PK1, PK2 wird der Fokus der Einstellung des landwirtschaftlichen Fahrzeuggespanns 1 entsprechend ausgerichtet. Wird beispielsweise eine Gewichtung gewählt, bei welcher beide Schwadprozesskriterien PK1, PK2 gleichermaßen berücksichtigt werden, so erfolgt die Einstellung des landwirtschaftlichen Fahrzeuggespanns 1 unter der Prämisse einen Kompromiss zu finden, welcher beide Schwadprozesskriterien PK1, PK2 und somit den diesen Schwadprozesskriterien PK1, PK2 zugrundeliegenden Schwadprozesszielgrößen gleichermaßen befriedigt. Wird hingegen beispielsweise eine Gewichtung gewählt, bei welcher ein Schwadprozesskriterium PK1, PK2 ausschließlich gewählt wird, führt dies dazu, dass die Einstellung des landwirtschaftlichen Fahrzeuggespanns 1 lediglich unter Maßgabe des entsprechend ausgewählten Schwadprozesskriteriums PK1, PK2 und somit den dem gewählten Schwadprozesskriterium PK1, PK2 zugrundeliegenden der Schwadprozesszielgrößen erfolgt, das andere Schwadprozesskriterium PK2, PK1 bleibt gänzlich unberücksichtigt.

Konkret erfolgt die Umsetzung der durch den Bediener B vorgenommen Gewichtung der Schwadprozesskriterien PK1, PK2 derart, dass abhängig von der Wahl des Bedieners B durch das Fahrerassistenzsystem 15, insbesondere durch die Recheneinheit 16 des Fahrerassistenzsystems 15, ein der Gewichtung der Schwadprozesskriterien PK1, PK2 entsprechendes im Speicher 17 hinterlegtes Kennfeld K1a, ..., K1n ausgewählt wird. Ein solches Kennfeld K1a, ..., K1n repräsentiert dabei jeweils funktionale Zusammenhänge von einzelnen oder allen der genannten Schwadprozessparametern P, die durch Ansteuerung der Arbeitsaggregate des Traktors 2 und/oder der Schwadvorrichtung 3, hier des Kreiselschwaders 4, einstellbar sind. Beispielsweise könnte ein solches Kennfeld K1a, ..., K1n funktionale Zusammenhänge der Schwadprozessparameter Fahrgeschwindigkeit, Umfangsgeschwindigkeit der Schwadkreisel 7 und Rechhöhe der Schwadkreisel 7 definieren. Je nach vorgenommener Gewichtung wird ein der Gewichtung entsprechendes Kennfeld K1a, ..., K1n aus der Vielzahl von im Speicher 17 hinterlegten Kennfelder K1a, ..., K1n gewählt. In Abhängigkeit des ausgewählten Kennfeldes K1a, ..., K1n werden sodann gemäß einem definierten Betriebspunkt im ausgewählten Kennfeld K1a, ..., K1n die Arbeitsaggregate des Traktors 2 und/oder der Schwadvorrichtung 3, hier des Kreiselschwaders 4, entsprechend zur Einstellung der für die Erreichung der vorgenommenen Gewichtung der Schwadprozesskriterien PK1, PK2 bzw. der zugrundeliegenden Schwadprozesszielgrößen erforderlichen Schwadprozessparameter durch die Recheneinheit 16 des Fahrerassistenzsystems 15 angesteuert.

Die dem Fahrerassistenzsystem 15 zur Verfügung stehenden Informationen, also die von fahrzeuggespanninternen Sensorsystemen 14 generierten Informationen, die externen Informationen, die im Speicher 17 hinterlegbaren bzw. hinterlegten Informationen und die mittels der Bedien- und Anzeigeeinheit 18 vorgebbaren bzw. vorgegebenen Informationen können dabei Eingangsgrößen des ausgewählten Kennfeldes K1a, ..., K1n bilden. Anhand dieser Eingangsgrößen kann der für die Realisierung der vorgegebenen Gewichtung von Schwadprozesskriterien PK1, PK2 zu wählende Betriebspunkt, auch als für die Realisierung der Gewichtung bei den vorherrschenden Randbedingungen optimaler Betriebspunkt bezeichnet, bestimmt werden. Wie bereits dargelegt wird durch die Recheneinheit 16 anschließend mittels Ansteuerung der Arbeitsaggregate des Traktors 2 und/oder der Schwadvorrichtung 3, hier des Kreiselschwaders 4, sichergestellt, dass das landwirtschaftliche Fahrzeuggespann 1 im für die Gewichtung optimalen Betriebspunkt betrieben wird.

Das Fahrerassistenzsystem 15 bzw. die Recheneinheit 16 kann mit Blick auf den Betrieb des landwirtschaftlichen Fahrzeuggespanns 1 im optimalen Betriebspunkt ferner dazu vorgesehen und eingerichtet sein, mittels der von fahrzeuggespanninternen Sensorsystemen 14 generierten Informationen einen aktuellen Betriebspunkt zu ermitteln, in welchem das landwirtschaftliche Fahrzeuggespann 1 derzeit betrieben wird. Diesen ermittelten aktuellen Betriebspunkt kann die Recheneinheit 16 mit dem anhand des ausgewählten Kennfeldes K1a, ..., K1n bestimmten für die Realisierung der vorgenommenen Gewichtung der Schwadprozesskriterien PK1, PK2 optimalen Betriebspunkt vergleichen. Basierend auf dem vorgenommenen Vergleich kann die Recheneinheit 16 bei einer vorliegenden Abweichung die zum Erreichen des optimalen Betriebspunktes erforderliche Schwadprozessparameter durch Ansteuerung der Arbeitsaggregate des Traktors 2 und/oder der Schwadvorrichtung 3, hier des Kreiselschwaders 4, einstellen.

Wie angedeutet kann die Unterstützung des Bedieners B bei der Einstellung des landwirtschaftlichen Fahrzeuggespanns 1 auf zwei Weisen erfolgen. Gemäß einer zweiten Ausgestaltung erfolgt die Unterstützung des Bedieners B durch das Fahrerassistenzsystem 15 mittels Charakterisierung von den Schwaden, also dem Schwadprozess, nachgelagerten Prozessschritten der Erntegutprozesskette. Die Charakterisierung des dem Schwaden nachgelagerten Prozessschrittes erfolgt durch den Bediener B ebenfalls mittels der Bedien- und Anzeigeeinheit 18 des Fahrerassistenzsystems 15 und zwar anhand einer Vorgabe des nachgelagerten Prozessschrittes, also eines Ballenpressens oder einer Schwadernte, selbst, anhand einer Vorgabe einer Arbeitsmaschine, die zur Durchführung des nachgelagerten Prozessschrittes Verwendung findet, also einer landwirtschaftlichen Ballenpresse, eines Feldhäckslers und/oder eines Ladewagen, und/oder anhand einer Vorgabe eines zur Verarbeitung des zusammengelegten bzw. -gerechten Schwads 13 vorgesehenen Arbeitsaggregats einer Arbeitsmaschine, die zur Durchführung des nachgelagerten Prozessschrittes Verwendung findet, also einer Längsschnittvorrichtung oder einer Querschnittvorrichtung.

Anhand der seitens des Bedieners B vorgenommenen Charakterisierung des dem Schwaden nachgelagerten Prozessschrittes wird dann durch das Fahrerassistenzsystem 15 bzw. die Recheneinheit 16 des Fahrerassistenzsystems 15 ebenfalls ein Kennfeld K2a, ..., K2n ausgewählt wird. Ein solches Kennfeld K2a, ..., K2n repräsentiert wie auch schon das in Bezug auf die Gewichtung von Schwadprozesskriterien PK1, PK2 genannte Kennfeld K1a, ..., K1n dabei jeweils funktionale Zusammenhänge von einzelnen oder allen der genannten Schwadprozessparametern P, die durch Ansteuerung der Arbeitsaggregate des Traktors 2 und/oder der Schwadvorrichtung 3, hier des Kreiselschwaders 4, einstellbar sind. Beispielsweise könnte ein solches Kennfeld K2a, ..., K2n funktionale Zusammenhänge der Schwadprozessparameter Fahrgeschwindigkeit, Umfangsgeschwindigkeit der Schwadkreisel 7 und Rechhöhe der Schwadkreisel definieren. Je nach durch den Bediener B vorgenommener Charakterisierung wird ein dem aus der Charakterisierung abgeleiteten Prozessschritt entsprechendes Kennfeld K2a, ..., K2n aus der Vielzahl von im Speicher 17 hinterlegten Kennfelder K2a, ..., K2n ausgewählt. In Abhängigkeit des ausgewählten Kennfeldes K2a, ..., K2n werden sodann gemäß einem definierten Betriebspunkt im ausgewählten Kennfeld K2a, ..., K2n die Arbeitsaggregate des Traktors 2 und/oder der Schwadvorrichtung 3, hier des Kreiselschwaders 4, entsprechend im Hinblick auf die Durchführung des dem Schwaden nachgelagerten Prozessschrittes erforderlichen Schwadprozessparameter durch die Recheneinheit 16 des Fahrerassistenzsystems 15 angesteuert.

Die dem Fahrerassistenzsystem 15 zur Verfügung stehenden Informationen, also die von fahrzeuggespanninternen Sensorsystemen 14 generierten Informationen, die externen Informationen, die im Speicher 17 hinterlegbaren bzw. hinterlegten Informationen und die mittels der Bedien- und Anzeigeeinheit 18 vorgebbaren bzw. vorgegebenen Informationen können auch hier Eingangsgrößen des ausgewählten Kennfeldes K2a, ..., K2n bilden. Anhand dieser Eingangsgrößen kann der im Hinblick auf den durch die Charakterisierung vorgegebenen dem Schwaden nachgelagerten Prozessschritt zu wählende Betriebspunkt, auch als im Hinblick auf den durch die Charakterisierung vorgegebenen dem Schwaden nachgelagerten Prozessschritt optimalen Betriebspunkt bezeichnet, bestimmt werden. Wie bereits dargelegt wird durch die Recheneinheit 16 anschließend mittels Ansteuerung der Arbeitsaggregate des Traktors 2 und/oder der Schwadvorrichtung 3, hier des Kreiselschwaders 4, sichergestellt, dass das landwirtschaftliche Fahrzeuggespann 1 im bestimmten optimalen Betriebspunkt betrieben wird.

Das Fahrerassistenzsystem 15 bzw. die Recheneinheit 16 kann ebenfalls mit Blick auf den Betrieb des landwirtschaftlichen Fahrzeuggespanns 1 im optimalen Betriebspunkt ferner dazu vorgesehen und eingerichtet sein, mittels der von fahrzeuggespanninternen Sensorsystemen 14 generierten Informationen einen aktuellen Betriebspunkt zu ermitteln, in welchem das landwirtschaftliche Fahrzeuggespann 1 derzeit betrieben wird. Diesen ermittelten aktuellen Betriebspunkt kann die Recheneinheit 16 mit dem anhand des ausgewählten Kennfeldes K2a, ..., K2n bestimmten optimalen Betriebspunkt vergleichen. Basierend auf dem vorgenommenen Vergleich kann die Recheneinheit 16 bei einer vorliegenden Abweichung die zum Erreichen des optimalen Betriebspunktes erforderliche Schwadprozessparameter durch Ansteuerung der Arbeitsaggregate des Traktors 2 und/oder der Schwadvorrichtung 3, hier des Kreiselschwaders 4, einstellen.

Die Unterstützung des Bedieners B bei der Einstellung des landwirtschaftlichen Fahrzeuggespanns 1 durch das Fahrerassistenzsystem 15 kann gemäß einer der beiden zuvor beschriebenen Vorgehensweisen, also mittels Vorgabe von zwei konkurrierenden Schwadprozesskriterien PK1, PK2 oder mittels Charakterisierung eines dem Schwaden nachgelagerten Prozessschrittes und Auswahl eines entsprechendes Kennfeldes K1a, ..., K1n; K2a, ..., K2n erfolgen. Es besteht allerdings auch die Möglichkeit beide Vorgehensweisen zu kombinieren, sodass zuerst die Vorgabe von Schwadprozesskriterien PK1, PK2 und anschließend eine Charakterisierung eines dem Schwaden nachgelagerten Prozessschrittes erfolgt oder umgekehrt. Werden beide Vorgehensweisen kombiniert, führt dies dazu, dass eine Adaption des Verfahrens stattfindet. Diese Adaption wird durch das Fahrerassistenzsystem 15 bzw. die Recheneinheit 16 des Fahrerassistenzsystems 15 durchgeführt und kann eine Adaption des anhand der zuerst ausgeführten Vorgehensweise bestimmten optimalen Betriebspunktes im ausgewählten Kennfeld K1a, ..., K1n; K2a, ..., K2n, eine Adaption des bei der zuerst ausgeführten Vorgehensweise ausgewählten Kennfeldes K1a, ..., K1n; K2a, ..., K2n oder eine Auswahl eines anderen im Speicher 17 des Fahrerassistenzsystems 15 hinterlegten Kennfeldes K1a, ..., K1n; K2a, ..., K2n umfassen.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliches Fahrzeuggespann | 17 | Speicher |
| | | 18 | Bedien- und Anzeigeeinheit |
| 2 | Traktor | 19 | Bedienelement |
| 3 | Schwadvorrichtung | | |
| 4 | Kreiselschwader | FR | Fahrtrichtung |
| 5 | Erntegut | FB | Breitenrichtung |
| 6 | Landwirtschaftliche Fläche | B | Bediener |
| 7 | Schwadkreisel | BS | Schwadbreite |
| 8 | Rechkreisel | | |
| 9 | Zinkenarm | PK | Schwadprozesskriterium |
| 10 | Rechzinken | PK1 | Schwadprozesskriterium "Leistung" |
| 11 | Fahrgestell | | |
| 12 | Laufrad | PK2 | Schwadprozesskriterium "Qualität" |
| 13 | Schwad | K1a,..., K1n | Kennfeld |
| 14 | Sensorsystem | | |
| 15 | Fahrerassistenzsystem | K2a, ...,K2n | Kennfeld |
| 16 | Recheneinheit | | |

## Patentansprüche

1. Fahrerassistenzsystem (15) für ein landwirtschaftliches Fahrzeuggespann (1), wobei das landwirtschaftliche Fahrzeuggespann (15) einen Traktor (2) und eine an den Traktor (2) adaptierte Schwadvorrichtung (3) zum Schwaden von abgemähtem Erntegut (5) umfasst, wobei der Traktor (2) und die Schwadvorrichtung (3) jeweils mittels des Fahrerassistenzsystems (15) ansteuerbare Arbeitsaggregate umfassen, wobei das Fahrerassistenzsystem (15) dazu vorgesehen und eingerichtet ist, einen Bediener (B) bei der Einstellung des landwirtschaftlichen Fahrzeuggespanns (1) zu unterstützen, wobei das Fahrerassistenzsystem (15) eine Recheneinheit (16), einen Speicher (17) und zumindest eine Bedien- und Anzeigeeinheit (18) umfasst, wobei die Recheneinheit (16) dazu vorgesehen und eingerichtet ist, von fahrzeuggespanninternen Sensorsystemen (14) generierte Informationen, externe Informationen, in dem Speicher (17) hinterlegbare Informationen und mittels der Bedien- und Anzeigeeinheit (18) vorgebbare Informationen zu verarbeiten, **dadurch gekennzeichnet, dass** mittels der Bedien- und Anzeigeeinheit (18) ein dem Schwaden nachgelagerter Prozessschritt einer Erntegutprozesskette durch den Bediener (B) charakterisierbar ist, wobei in dem Speicher (17) Kennfelder (K1a, ..., K1n; K2a, ..., K2n) hinterlegt sind, welche jeweils funktionale Zusammenhänge von Schwadprozessparametern, die mittels Ansteuerung der Arbeitsaggregate des Traktors (2) und/oder der Schwadvorrichtung (3) einstellbar sind, repräsentieren, wobei das Fahrerassistenzsystem (15) dazu vorgesehen und eingerichtet ist, basierend auf der durch den Bediener (B) vorgenommenen Charakterisierung des dem Schwaden nachgelagerten Prozessschrittes ein in dem Speicher (17) hinterlegtes Kennfeld (K2a, ..., K2n) auszuwählen, wobei die Recheneinheit (16) dazu vorgesehen und eingerichtet ist, die Arbeitsaggregate des Traktors (2) und/oder der Schwadvorrichtung (3) entsprechend des ausgewählten Kennfeldes (K2a, ..., K2n), vorzugsweise automatisch, anzusteuern.

2. Fahrerassistenzsystem (15) nach Anspruch 2, **dadurch gekennzeichnet, dass** die Charakterisierung des dem Schwaden nachgelagerten Prozessschrittes mittels der Bedien- und Anzeigeeinheit (18) durch den Bediener (B) anhand einer Vorgabe des nachgelagerten Prozessschrittes, insbesondere Ballenpressen oder Schwadernte, einer Arbeitsmaschine zur Durchführung des nachgelagerten Prozessschrittes, insbesondere landwirtschaftliche Ballenpresse, Feldhäcksler und/oder Ladewagen, und/oder eines zur Verarbeitung des Schwads (13) vorgesehenen Arbeitsaggregats einer Arbeitsmaschine zur Durchführung des nachgelagerten Prozessschrittes, insbesondere Längsschnittvorrichtung oder Querschnittvorrichtung, erfolgt.

3. Fahrerassistenzsystem (15) nach Anspruch 1 oder 2, **dadurch gekennzeichnet, dass** die von fahrzeuggespanninternen Sensorsystemen (14) generierten Informationen, die externen Informationen, die im Speicher (17) hinterlegbaren Informationen und die mittels der Bedien- und Anzeigeeinheit (18) vorgebbaren Informationen Eingangsgrößen des ausgewählten Kennfeldes (K2a, ..., K2n) zur Bestimmung eines optimalen Betriebspunktes bilden, wobei die Recheneinheit (16) dazu vorgesehen und eingerichtet ist, durch Ansteuerung der Arbeitsaggregate des Traktors (2) und/oder der Schwadvorrichtung (3) das landwirtschaftliche Fahrzeuggespann (1) im optimalen Betriebspunkt zu betreiben.

4. Fahrerassistenzsystem (15) nach Anspruch 3, **dadurch gekennzeichnet, dass** die Recheneinheit (16) dazu vorgesehen und eingerichtet ist, mittels der von fahrzeuggespanninternen Sensorsystemen (14) generierten Informationen einen aktuellen Betriebspunkt zu ermitteln und den aktuellen Betriebspunkt mit dem anhand des ausgewählten Kennfeldes (K2a, ..., K2n) bestimmten optimalen Betriebspunkt zu vergleichen.

5. Fahrerassistenzsystem (15) nach Anspruch 4, **dadurch gekennzeichnet, dass** die Recheneinheit (16) dazu vorgesehen und eingerichtet ist, basierend auf dem Vergleich zum Erreichen des optimalen Betriebspunktes erforderliche Schwadprozessparameter durch Ansteuerung der Arbeitsaggregate des Traktors (2) und/oder der Schwadvorrichtung (3) einzustellen.

6. Fahrerassistenzsystem (15) nach einem der Ansprüche 3 bis 5, **dadurch gekennzeichnet, dass** die Bedien- und Anzeigeeinheit (18) dazu vorgesehen und eingerichtet ist, dem Bediener (B) zumindest zwei konkurrierende Schwadprozesskriterien (PK1, PK2) vorzugeben, wobei mittels der Bedien- und Anzeigeeinheit (18) eine Gewichtung der vorgegebenen Schwadprozesskriterien (PK1, PK2) durch den Bediener (B) vornehmbar ist, wobei das Fahrerassistenzsystem (15) dazu vorgesehen und eingerichtet ist, basierend auf der durch den Bediener (B) vorgenommenen Gewichtung der Schwadprozesskriterien (PK1, PK2) den optimalen Betriebspunkt im ausgewählten Kennfeld (K2a, ..., K2n) und/oder das ausgewählte Kennfeld (K2a, ..., K2n) zu adaptieren oder ein anderes im Speicher (17) hinterlegtes Kennfeld (K2a, ..., K2n; K1a, ..., K1n) auszuwählen.

7. Fahrerassistenzsystem (15) nach Anspruch 6, **dadurch gekennzeichnet, dass** die Schwadprozesskriterien (PK1, PK2) "Leistung" und "Qualität" sind, wobei das Schwadprozesskriterium (PK1) "Leistung" die Schwadprozesszielgrößen Schwaddichte und/oder Trockenmassegehalt des Schwades (13) und das Schwadprozesskriterium (PK2) "Qualität" die Schwadprozesszielgrößen Verschmutzungsgrad des Schwades (13), Halmausrichtung im Schwad (13) und/oder Schwadgeometrie umfasst, wobei die Prozesszielgrößen abrufbar im Speicher (17) hinterlegt sind und/oder durch den Bediener (B) auswählbar und/oder parametrisierbar sind.

8. Fahrerassistenzsystem (15) nach Anspruch 6 oder 7, **dadurch gekennzeichnet, dass** die Bedien- und Anzeigeeinheit (18) zumindest ein virtuelles Bedienelement (19) zur Vorgabe der Gewichtung der vorgegebenen Schwadprozesskriterien (PK1, PK2) durch den Bediener (B) umfasst.

9. Fahrerassistenzsystem (15) nach einem der Ansprüche 1 bis 8, **dadurch gekennzeichnet, dass** die Schwadvorrichtung (3) als Kreiselschwader (4) ausgebildet ist, wobei der Kreiselschwader (4) mindestens einen Schwadkreisel (7), der einen Rechkreisel (8) mit an Zinkenarmen (9) gelagerten Rechzinken (10) aufweist, umfasst, wobei die Schwadprozessparameter eine Drehzahl des Schwadkreisels (7), eine Umfangsgeschwindigkeit des Schwadkreisels (7), eine Rechhöhe des Schwadkreisels (7), eine Neigung des Schwadkreisels (7), eine horizontale Lage des Schwadkreisels (7), ein Auflagedruck des Schwadkreisels (7), eine Fahrgeschwindigkeit des landwirtschaftlichen Fahrzeuggespanns (1) und/oder eine Zapfwellendrehzahl des Traktors (2) sind.

10. Fahrerassistenzsystem (15) nach einem der Ansprüche 1 bis 9, **dadurch gekennzeichnet, dass** die externen Informationen und/oder die im Speicher (17) hinterlegbaren Informationen Geodaten, insbesondere Daten zur Lokalisierung des landwirtschaftlichen Fahrzeuggespanns (1), topologische Daten, Wetterdaten, insbesondere eine Luftdichte, eine Luftfeuchtigkeit, einen Luftdruck, eine Umgebungstemperatur, eine Sonneneinstrahlung, einen Bewölkungsgrad, eine Windgeschwindigkeit und/oder eine Windrichtung, und/oder agronomische Daten, insbesondere Bodendaten, Bestandsdaten, Ertragsdaten, Inhaltsstoffdaten und/oder Flächendaten, umfassen.

11. Fahrerassistenzsystem (15) nach einem der Ansprüche 1 bis 10, **dadurch gekennzeichnet, dass** das Fahrerassistenzsystem (15) dazu vorgesehen und eingerichtet ist, mittels der Bedien- und Anzeigeeinheit (18) die Einstellung des landwirtschaftlichen Fahrzeuggespanns (1) mit dem Bediener (B) dialogbasiert durchzuführen.

12. Fahrerassistenzsystem (15) nach einem der Ansprüche 1 bis 11, **dadurch gekennzeichnet, dass** das Fahrerassistenzsystem (15) dazu vorgesehen und eingerichtet ist, mittels der zumindest einen Bedien- und Anzeigeeinheit (18) die durch Ansteuerung der Arbeitsaggregate des Traktors (2) und/oder der Schwadvorrichtung (3) einzustellenden Schwadprozessparameter dem Bediener (B) zu visualisieren.

13. Landwirtschaftliches Fahrzeuggespann (1) umfassend einen Traktor (2) und eine an den Traktor (2) adaptierte Schwadvorrichtung (3) zum Schwaden von abgemähtem Erntegut (5) sowie ein Fahrerassistenzsystem (15), **dadurch gekennzeichnet, dass** das Fahrerassistenzsystem (15) nach einem der Ansprüche 1 bis 12 ausgebildet ist.
